# EUROPÄISCHE PATENTSCHRIFT

(11) **EP 0 540 880 B1**
(45) Veröffentlichungstag und Bekanntmachung des Hinweises auf die Patenterteilung: **03.01.1996**
(21) Anmeldenummer: 92116837.3
(22) Anmeldetag: 01.10.1992
(51) Int. Cl.: H01R 43/042

(54) **Zange zum Bearbeiten von Leiterenden**
Crimping tool for processing wire terminals
Pince de sertissage pour extrémités de fils

(30) Priorität: 04.11.1991 DE 4136302
(43) Veröffentlichungstag der Anmeldung: 12.05.1993
(73) Patentinhaber: Weidmüller Interface GmbH & Co., D-32760 Detmold (DE)
(72) Erfinder: Schmode, Hartmut, W-4933 Bloberg (DE); Storm, Siegfried, W-4797 Schlangen (DE); Thiele, Helmut, W-4708 Kamen (DE); Wiebe, Ulrich, W-4926 Dörentrup (DE); David, Bernd, W-4930 Detmold (DE); Hetland, Detlev, W-4930 Detmold 14 (DE); Kornfeld, Hans-Joachim, W-4973 Vlotho (DE); Salten, Johann-Georg, W-4937 Lage/Hagen (DE)
(74) Vertreter: Urner, Peter, Dipl.-Phys.

(56) Entgegenhaltungen:
- DE-A- 2 149 167
- US-A- 3 710 610
- US-A- 4 126 936
- US-A- 4 774 762

## Beschreibung

Die Erfindung betrifft eine Zange zum Bearbeiten von Leiterenden gemäß dem Oberbegriff des Patentanspruchs 1.

Eine Zange der genannten Art ist bereits aus der DE-C-24 02 187 bekannt. Bei der bekannten Zange handelt es sich um eine Abisolierzange, die zwei relativ zueinander bewegbare Handgriffe, wenigstens eine Bearbeitungsstation zum Abisolieren von Leiterenden und eine Antriebseinrichtung aufweist, über die bei Betätigung der Handgriffe die Bearbeitungsstation antreibbar ist.

Der Erfindung liegt die Aufgabe zugrunde, eine Zange zu schaffen, mit der Leiterenden in unterschiedlicher Weise bearbeitet werden können, wobei einzelne Bearbeitungsfunktionen der Zange wahlweise zuschaltbar sein sollen, und zwar unmittelbar durch den Bewegungsablauf beim Bearbeitungsvorgang.

Die Lösung der gestellten Aufgabe ist im kennzeichnenden Teil des Patentanspruchs 1 angegeben. Vorteilhafte Weiterbildungen der Erfindung sind den Unteransprüchen zu entnehmen.

Eine Zange nach der Erfindung zeichnet sich dadurch aus, daß wenigstens eine weitere über die Antriebseinrichtung antreibbare Bearbeitungsstation vorhanden ist, und daß ferner wenigstens eine der Bearbeitungsstationen mit Hilfe des zu bearbeitenden Leiterendes mit der Antriebseinrichtung kuppelbar ist.

Nach der Erfindung wird somit eine Kombizange erhalten, die zwar mehrere durch die Antriebseinrichtung antreibbare Bearbeitungsstationen aufweist, von denen jedoch nicht alle permanent mit der Bewegung der Handgriffe über die Antriebseinrichtung angetrieben werden. Mindestens eine der Bearbeitungsstationen bleibt so lange von der Antriebseinrichtung entkuppelt, bis sie tatsächlich benötigt wird. Hierdurch läßt sich der Verschleiß dieser Bearbeitungseinrichtung reduzieren, während andererseits die Zange bei entkuppelter Bearbeitungsstation mit geringerem Kraftaufwand betrieben werden kann.

Die Kupplung der Bearbeitungsstation mit der Antriebseinrichtung erfolgt unmittelbar im Zuge der Bewegung des Leiterendes bzw. unter Verwendung des Leiterendes selbst, so daß vom Benutzer keine weiteren Einstellvorgänge durchgeführt zu werden brauchen. Dies erleichtert die Handhabung der Zange ganz wesentlich.

Eine Bearbeitungsstation der Zange, die über die Antriebseinrichtung bei Bewegung der Handgriffe permanent angetrieben wird, kann beispielsweise eine Abisolierstation sein, während die mit der Antriebseinrichtung kuppelbare Bearbeitungsstation eine Crimpstation sein kann. Das Abisolieren von Leiterenden und das Aufcrimpen von z. B. Aderendhülsen auf Leiterenden sind Vorgänge, die im allgemeinen unmittelbar aufeinander folgen. Mit der erfindungsgemäßen Zange lassen sich beide Funktionen durchführen, so daß es nicht mehr erforderlich ist, für diese Bearbeitungsvorgänge getrennte Zangen zu verwenden. Soll nur abisoliert werden, so bleibt die Crimpfunktion praktisch ausgeschaltet, so daß sich die Zange mit geringerem Kraftaufwand betätigen läßt.

Selbstverständlich kann die Zange noch zusätzliche Bearbeitungsstationen aufweisen, beispielsweise eine Schneidstation zum Durchtrennen von Leitern. Diese Schneidstation muß jedoch nicht unbedingt über die Antriebseinrichtung angetrieben werden. Die Schneideinrichtungen der Schneidstation können auch unmittelbar an den Handgriffen befestigt sein.

Ein Ausführungsbeispiel der Erfindung wird nachfolgend unter Bezugnahme auf die Zeichnung näher beschrieben. Es zeigen:
- Fig. 1: einen Längsschnitt durch die Zange bei nicht zusammengedrückten Handgriffen,
- Fig. 2: einen Querschnitt durch einen oberen Handgriff der Zange entlang der Linie A-A in Fig. 1,
- Fig. 3: einen Querschnitt durch einen unteren Handgriff der Zange entlang der Linie B-B in Fig. 1,
- Fig. 4: einen vergrößert dargestellten Längsschnitt durch die Zange bei vollständig zusammengedrückten Handgriffen,
- Fig. 5: eine perspektivische Darstellung eines zum Abisolierenden verwendeten Zugelements der Zange,
- Fig. 6: eine perspektivische Ansicht des unteren Handgriffs von einer Seite mit angesetzter Antriebseinrichtung und Crimptrommel,
- Fig. 7: eine perspektivische Ansicht des unteren Handgriffs der Zange von der anderen Seite mit zusätzlich angesetzter beweglicher Klemmbacke,
- Fig. 8: eine perspektivische Ansicht der vergrößert dargestellten Crimptrommel mit beigeordneter Vorratsstation für Aderendhülsen,
- Fig. 9: eine Seitenansicht der Crimptrommel nach Fig. 8,
- Fig. 10: einen Crimphebel mit eingesetztem Crimpstempel,
- Fig. 11: Crimphebel und Crimpstempel in perspektivischer Darstellung,
- Fig. 12: einen Transporthebel der Antriebseinrichtung, mit dem die Crimptrommel kuppelbar ist,
- Fig. 13: eine Perspektivansicht der Zange im Bereich der Crimptrommel und der Vorratsstation zur Erläuterung des Aufbaus einer Transporteinrichtung für Aderendhülsen,
- Fig. 13a: eine andere Ausgestaltung der Transporteinrichtung,
- Fig. 14: eine Perspektivansicht bandförmig verketteter Aderendhülsen, und
- Fig. 15a bis 15c: verschiedene Betriebsstellung der Zange.

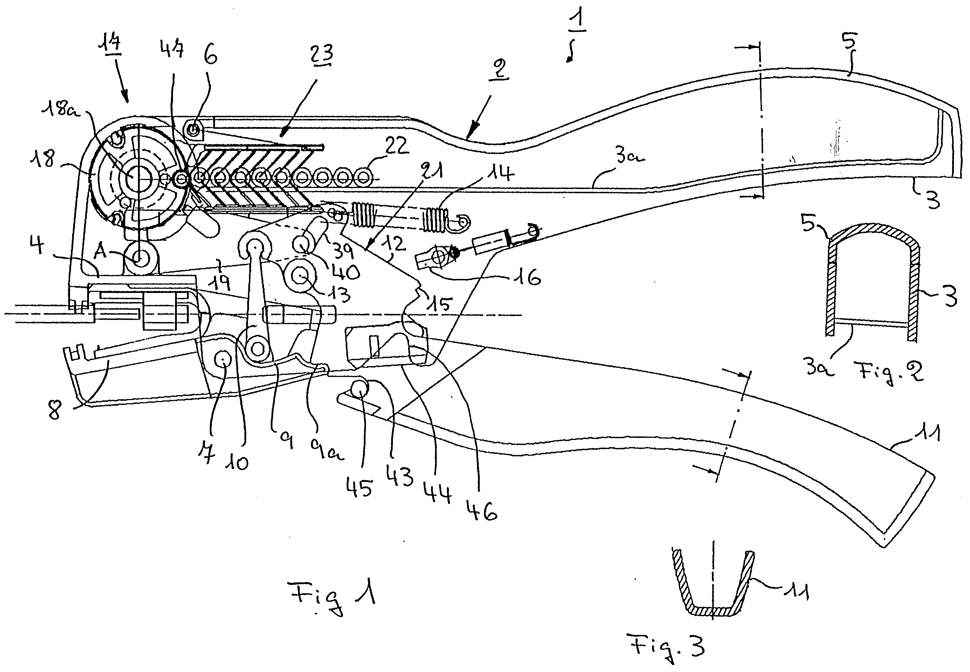

Entsprechend der Fig. 1 weist die erfindungsgemäße Zange 1 einen einstückigen, hohlen Zangenkörper 2 auf, dessen hinterer Teil durch einen oberen und unbeweglichen Handgriff 3 gebildet ist. Der vordere Teil des Zangenkörpers 2 ist in Form einer feststehenden Klemmbacke 4 ausgebildet. Ein Deckel 5 des Zangenkörpers 2 ist um eine Achse 6 schwenkbar, so daß das Innere des Zangenkörpers 2 von der oberen Seite der Zange 1 her zugänglich ist.

Mittels eines Lagerzapfens 7 ist im unteren Bereich des Zangenkörpers 2 eine bewegliche Klemmbacke 8 schwenkbar gelagert. Sie liegt der feststehenden Klemmbacke 4 gegenüber. Eine Steuerfläche 9 der beweglichen Klemmbacke 8, die den Lagerzapfen 7 nach hinten überragt und dem Zangenkörper 2 zugewandt ist, wird von einem Gelenkhebel 10 beaufschlagt, der auf der Steuerfläche 9 entlanggleitet und somit das Öffnen und Schließen der beweglichen Klemmbacke 8 steuert. Dies wird später genauer beschrieben.

Ein unterer Handgriff 11 der Zange 1 ist einstückig mit einem Antriebsteil 12 verbunden, wobei das Antriebsteil 12 mittels eines Lagerzapfens 13 am Zangenkörper 2 schwenkbar gelagert ist. Der untere Handgriff 11 ist somit über das Antriebsteil 12 und den Lagerzapfen 13 schwenkbar am Zangenkörper 2 gehalten, so daß eine Relativbewegung zwischen unterem Handgriff 11 und oberem Handgriff 3 möglich ist. Eine Zugfeder 14 greift oberhalb des Lagerzapfens 13 am Antriebsteil 12 an und ist andererseits mit dem Zangenkörper 2 an einem Punkt verbunden, der in Richtung des oberen Handgriffs 3 liegt. Mit Hilfe der Zugfeder 14 wird somit der untere Handgriff 11 im Uhrzeigersinn um den Lagerzapfen 13 herumgedreht, so daß die Zugfeder 14 versucht, die Handgriffe 3 und 11 dauernd in gespreizter Stellung zu halten.

Eine kurze Zahnreihe bzw. eine Zahnlücke 15 am hinteren Ende des Antriebsteils 12 arbeitet zusammen mit einem federbelasteten und im Zangenkörper 2 drehbar gelagerten Sperrhaken 16 als Sperre gegen ein frühzeitiges Öffnen des Zange 1.

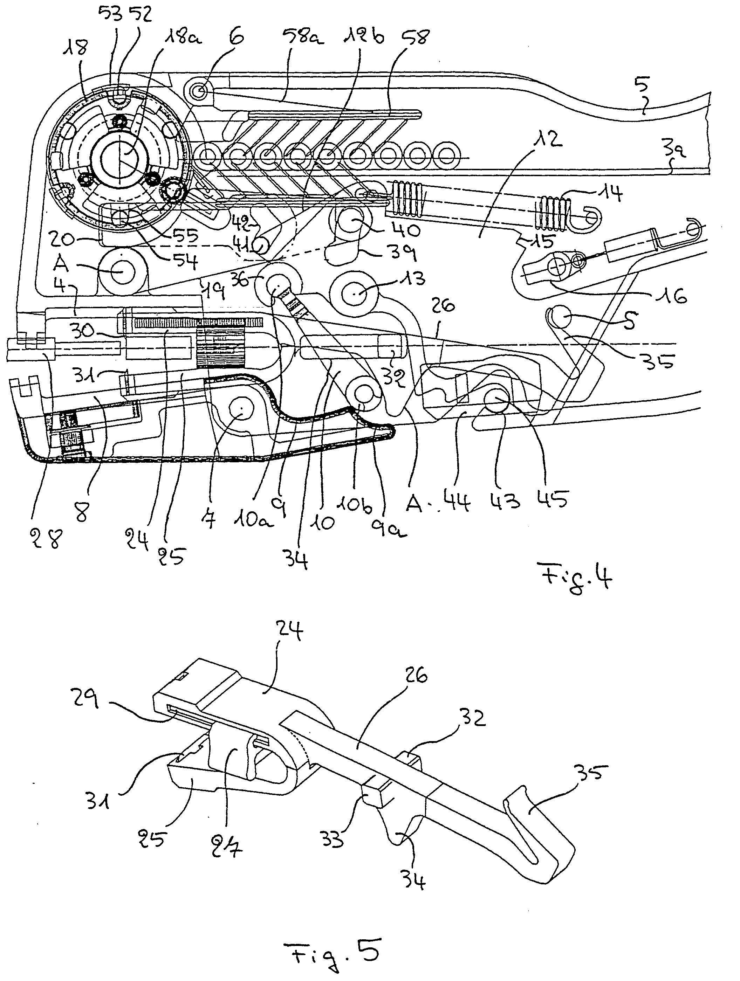

Im oberen und vorne liegenden Teil des Zangenkörpers 2 befindet sich eine Crimpstation 17, zu der eine Crimptrommel 18 und ein Crimphebel 19 gehören. Wie noch zu erläutern ist, wird der Crimphebel 19 mit Hilfe des Antriebsteils 12 angetrieben, während das Antriebsteil 12 auch für die Drehung der Crimptrommel 18 sorgt, und zwar mit Hilfe eines Transporthebels 20, der in Fig. 4 zu erkennen ist. Das Antriebsteil 12, der Gelenkhebel 10 und der Transporthebel 20 bilden eine Antriebseinrichtung 21.

Fig. 2 zeigt einen Querschnitt durch den oberen Handgriff 3 entlang der Linie A-A von Fig. 1. Wie zu erkennen ist, ist der obere Handgriff 3 hohlraumförmig ausgebildet und weist in seinem unteren Bereich einen Boden 3a auf, der seitlich mit den Wänden des Handgriffs 3 verbunden ist. Der Boden 3a erstreckt sich aus dem Handgriff 3 hinaus auch in den Zangenkörper 2 hinein und wird bis nahe zur Crimpstation 17 geführt. In dem vom Boden 3a, den oberen Handgriff 3 und den Deckel 5 gebildeten Raum können Kontaktelemente gespeichert werden, die mit Aderenden zu vercrimpen sind, beispielsweise Aderendhülsen 22, die bandförmig aneinandergekettet sind. Sie werden mit Hilfe einer in der nähe der Crimpstation 17 auf dem Boden 3a positionierten Vorrats- und Transportstation 23 der Crimpstation 17 zugeführt.

In der Fig. 3 ist die Querschnittsform des unteren Handgriffs 11 näher dargestellt. Es handelt sich hierum einen Querschnitt entlang der Linie B-B in Fig. 1. Der untere Handgriff 11 ist in Richtung zum oberen Handgriff 3 offen und im wesentlichen U-förmig ausgebildet.

Unter Bezugnahme auf die Fig. 4 und 5 werden nachfolgend die wesentlichsten Bauelemente zur Durchführung der Abisolierfunktion näher beschrieben. Gleiche Elemente wie in den Fig. 1 bis 3 sind mit den gleichen Bezugszeichen versehen.

Zwischen der feststehenden Klemmbacke 4 und der beweglichen Klemmbacke 8 ist ein Paar von Schneidbacken 24, 25 angeordnet, die einstückig mit einem länglichen Zugelement 26 verbunden sind. Schneidbacken 24, 25 und Zugelemente 26 können z. B. aus Kunststoff hergestellt sein. Die obere Schneidbacke 24, die an der feststehenden Klemmbacke 4 anliegt, trägt einen einstellbaren Endanschlag 27 für ein abzuisolierendes Leiterende 28. Der Endanschlag 27 ist in einem Längsschlitze 29 klemmend verschiebbar. An einander zugewandten Seiten weisen die Schneidbacken 24 und 25 im jeweils vorderen Bereich Messer 30 und 31 zum Durchtrennen der Isolation eines Leiterendes auf. Die untere Schneidbacke 25, die in ihrem hinteren Bereich flexibel bzw. verschwenkbar mit der oberen Schneidbacke 24 verbunden ist, wird von der beweglichen Klemmbacke 8 geführt. Dreht sich die bewegliche Klemmbacke 8 um den Lagerzapfen 7 in Uhrzeigerrichtung herum, so wird einerseits das Leiterende 28 zwischen den Klemmbacken 4 und 8 eingeklemmt, während andererseits auch die Schneidbacken 24 und 25 aufeinander zu bewegt werden, so daß die Messer 30 und 31 die Isolation des Leiterendes 28 durchtrennen können. Die Bewegung der unteren Klemmbacke 8 und somit auch der unteren Schneidbacke 25 erfolgt durch Antrieb des Gelenkhebels 10, der auf der Steuerfläche 9 der beweglichen Klemmbacke 8 entlanggleitet, wie noch erläutert wird.

Dieser Gelenkhebel 10 dient auch zur Längsverschiebung der Schneidbacken 24 und 25 in Richtung zu den Handgriffen 3 und 11.

Wie bereits erwähnt, sind obere und untere Schneidbacke 24 und 24 einstückig mit dem länglichen Zugelement 26 verbunden. Dieses Zugelement 26 weist an gegenüberliegenden Seiten zwei horizontale Querarme 32 und 33 auf, die in einander gegenüberliegenden Längsschlitzen 34 geführt sind, die sich im seitlichen Bereich des Zangenkörpers 2 befinden. Die horizontalen Querarme 32 und 33 können einen rechteckförmigen oder runden Querschnitt aufweisen. Im Falle eines rechteckförmigen Querschnitts ist eine Drehung der Querarme 32 und 33 in den Längsschlitzen 34 nicht möglich.

Darüber hinaus ist mit dem länglichen Zugelement 26 ein nach unten weisender Ansatz A einstückig verbunden, dessen zu den Schneidbacken 24 und 25 weisende Vorderfläche vom Gelenkhebel 10 beaufschlagt wird, um das längliche Zugelement 26 über den Ansatz A nach hinten zu verschieben, worauf noch eingegangen wird.

Am hinteren Ende des länglichen Zugelements 26 befindet sich eine nachgiebig gestaltete Endpartie 35, die beispielsweise durch Umbiegen und Verjüngen des hinteren Teils des Zugelements 26 erhalten worden ist. Diese Endpartie 35 stützt sich elastisch an einem Stützelement S ab, welches am unteren Handgriff 11 befestigt ist. Das Stützelement S kann z. B. die Form einer Querstange aufweisen, die zwischen beiden Seitenwänden des unteren Handgriffs 11 verläuft. Gibt der Gelenkhebel 10 den Ansatz A frei, so wird durch die elastische Endpartie 35 das längliche Zugelement 26 und mit ihm zusammen die Schneidbacken 24 und 25 wieder in Richtung zur Vorderseite der Zange 1 bewegt. Das aus oberer und unterer Schneidbacke 24 und 25 sowie länglichem Zugelement 26 bestehende Bauteil kann der Einfachheit halber ebenfalls als längliches Zugelement bezeichnet werden.

Wie anhand der Fig. 4 zu erkennen ist, weist der Gelenkhebel 10 an seinem oberen Ende einen Wulst 10a auf, der in einem Lager 36 des Antriebsteils 12 schwenkbar gelagert ist. An seinem unteren Ende besitzt der Gelenkhebel 10 ein Gleitelement 10b, beispielsweise eine Gleitrolle. Der Gelenkhebel 10 wird also im Lager 36 gehalten und liegt zwischen dem Antriebsteil 12 und der Führungsfläche 9 der beweglichen Klemmbacke 8. Darüber hinaus befindet sich das Lager 36 an einer Position, die in bezug zum Lagerzapfen 13 in Vorwärtsrichtung der Zange 1 verschoben ist.

Wird somit der untere Handgriff 11 in Richtung des oberen Handgriffs 3 gedreht, so dreht sich gleichzeitig das Antriebsteil 12 um den Lagerzapfen 13. Die Drehung erfolgt hierbei entgegen der Uhrzeigerrichtung. Das bedeutet, daß der Gelenkhebel 10 auf der Steuerfläche 9 nach rechts und entgegen der Uhrzeigerrichtung ausweicht und somit zunächst bei entsprechender Formgebung der Steuerfläche 9 die bewegliche Klemmbacke 8 schließt, also in Richtung zur feststehenden Klemmbacke 4 führt. Erreicht er die stärker abfallende Steuerfläche 9a, die sich nach hinten an die Steuerfläche 9 anschließt, so wird die bewegliche Klemmbacke 8 freigegeben, was zur Folge hat, daß sie sich entgegengesetzt zur Uhrzeigerrichtung um den Lagerzapfen 7 drehen kann. Klemmund Schneidbacken öffnen daher.

Bei der zuvor beschriebenen Bewegung des Gelenkhebels 10 wird gleichzeitig das längliche Zugelement 26 nach hinten mitgenommen, also in Richtung der Handgriffe 11 und 3 verschoben, da das Gleitelement 10b des Gelenkhebels 10 auch gegen die Vorderfläche des Ansatzes A drückt und diesen nach hinten verschiebt. Werden die Handgriffe 3 und 11 freigegeben, können sie sich also aufgrund der Zugkraft der Zugfeder 14 wieder voneinander entfernen, so wird einerseits der Antriebsteil 12 im Uhrzeigersinn um den Lagerzapfen 13 gedreht, so daß der Gelenkhebel 10 die Steuerflächen 9 und 9a nicht mehr beaufschlagen kann, während andererseits das längliche Zugelement 26 aufgrund der Wirkung der elastischen Endpartie 35 nach vorn verschoben wird. Der Gelenkhebel 10 blockiert jetzt nicht mehr Ansatz A. Vielmehr wird auch er mit diesem Ansatz A zum vorderen Teil der Steuerfläche 9 verschoben.

Mit der Verschiebung des länglichen Zugelements 26 nach hinten wird die Isolierung des Leiterendes 28 vom Leiter abgezogen, während die abgezogene Isolierung mit der entgegengesetzten Bewegung seitlich herausfällt.

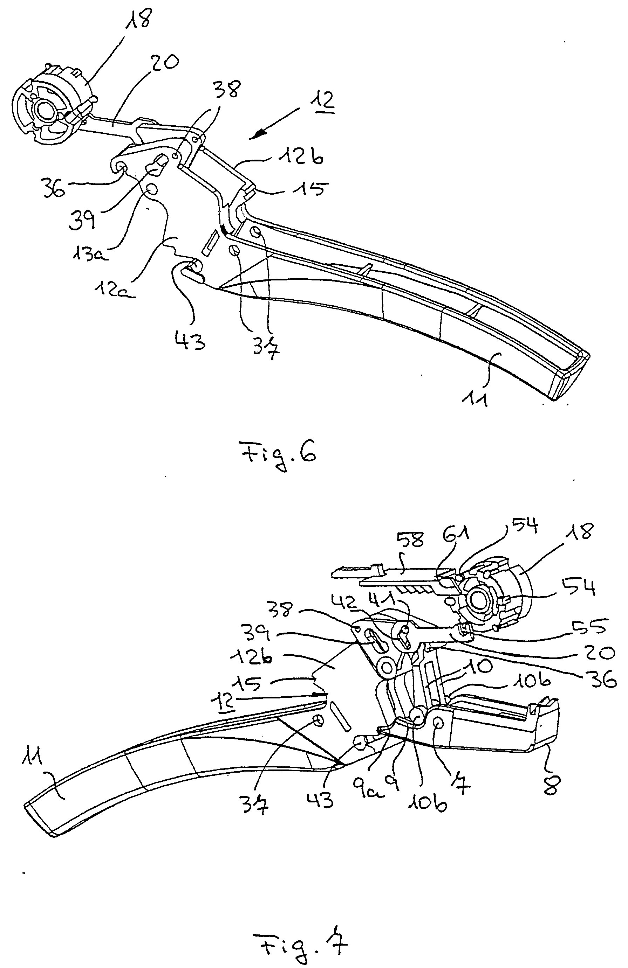

Die Fig. 6 und 7 zeigen genauer den Aufbau des beweglichen bzw. unteren Handgriffs 11. In Fig. 6 ist dabei seine eine Seite und in Fig. 7 seine andere Seite zu erkennen.

Mit dem vorderen Teil des unteren Handgriffs 11 ist einstückig der Antriebsteil 12 verbunden, wie bereits erläutert. Der Antriebsteil 12 weist zwei parallel zueinander liegende Wandbereiche 12a und 12b auf, die jeweils die Verlängerungen der Seitenwände des unteren Handgriffs 11 bilden und zusätzlich auch noch untereinander querversteift sein können. Öffnungen 37 in den vorderen Seitenwänden des unteren Handgriffs 11 dienen zur Aufnahme des stangenförmigen Stützelements 36 (Fig. 4). Die Zahnlücke 15 ist nur am rechten Wandelement 12b vorhanden.

Die Fig. 6 läßt erkennen, daß im linken Wandelement 12a eine Öffnung 13a für den Lagerzapfen 13 vorhanden ist sowie das Lager 36 zur Aufnahme des einen Endes 10a des Gelenkhebels 10. Darüber hinaus sind in beiden Wandelementen 12a, 12b Öffnungen 38 zur Befestigung der Zugfedern 14 vorgesehen.

Weiterhin befinden sich in beiden Wandelementen 12a, 12b abgewinkelte Führungsbahnen 39, in denen ein Zapfen 40 des Crimphebels 19 geführt wird. Dieser Crimphebel 19 durchragt beide Führungsbahnen 39, die deckungsgleich angeordnet sind.

Am rechten Wandelement 12b befindet sich gemäß Fig. 7 ferner ein Zapfen 41, der in eine abgewinkelte Führungsbahn 42 am Ende des Transporthebels 20 eingreift. Dieser Transporthebel 20 stellt die Kopplung zwischen dem Antriebsteil 12 und der Crimptrommel 18 dar, wie noch ausgeführt wird.

Fig. 7 läßt ebenfalls erkennen, wie der Gelenkhebel 10 im Lager 36 gelagert ist und die bewegliche Klemmbacke 8 ansteuert. Der Gelenkhebel 10 besteht aus zwei parallelen Stegen und weist jeweils außenliegende Gleitrollen 10b auf, die auf den Steuerflächen 9, 9a entlanggleiten.

Nicht zuletzt ist in den Fig. 6 und 7 ein Gegenlager 43 zur Aufnahme eines zu zerschneidenden Leiters zu erkennen. Dieses Gegenlager 43 arbeitet zusammen mit einem Messer 44 (Fig. 1 und 4), das in den Bereich des Gegenlagers 43 geführt wird bzw. dieses kreuzt, wenn die Handgriffe 11 und 3 zusammengedrückt werden. In den Fig. 1 und 4 ist ein zu zerschneidender Leiter mit dem Bezugszeichen 45 versehen. Das Messer 44 kann beispielsweise an der inneren Seitenwand des Zangenkörpers 2 befestigt sein. Es überdeckt dabei einen Schlitz 46 in der Seitenwand, in den der nur zum Teil zerschnittene Leiter einlaufen kann. Nachfolgend werden die zum Crimpen erforderlichen Bauelemente der Zange 1 im einzelnen beschrieben.

Entsprechend den Fig. 1 und 4 ist die Crimptrommel 18 im vorderen oberen Bereich des Zangenkörpers 2 gelagert. Die Crimptrommel 18 ist um eine Achse 18a drehbar, die an gegenüberliegenden Seitenwänden des Zangenkörpers 2 befestigt ist. Die Achse 18a verläuft praktisch senkrecht zur Zangenebene. Darüber hinaus ist die Crimptrommel 18 auf dieser Achse 18a auch in Axialrichtung um ein gewisses Stück verschiebbar, wobei sie mit Hilfe von Federkraft in Axialrichtung nach vorn vorgespannt wird, also bei Betrachtung der Fig. 1 und 4 aus der Papierebene heraus. Die Fig. 1 und 4 zeigen eine Draufsicht auf die Vorderseite der Crimptrommel 18.

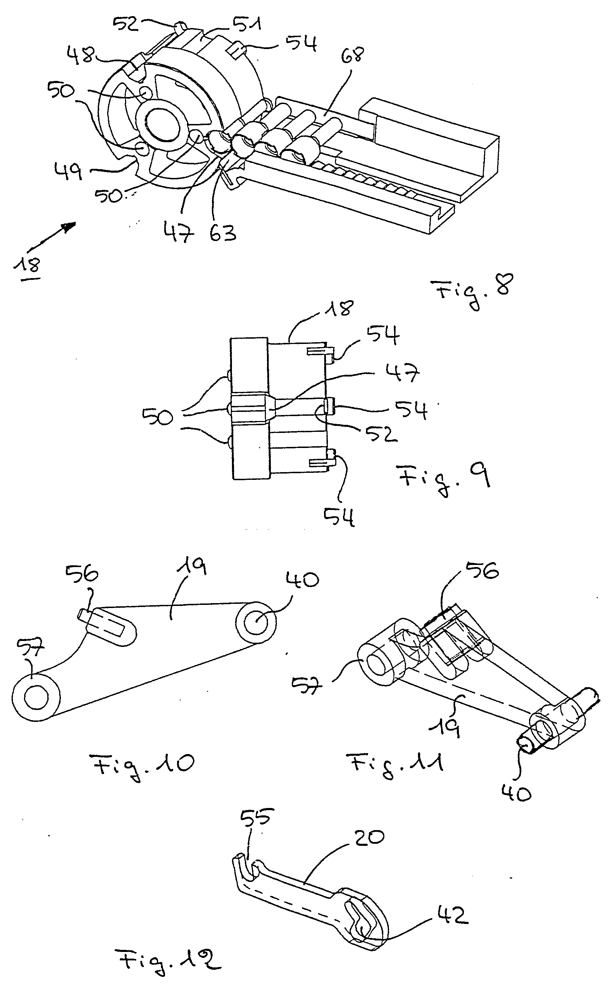

Wie ferner zu erkennen ist, weist die Crimptrommel 18 an ihrem Umfang eine Mehrzahl von in Axialrichtung verlaufenden Gesenken 47, 48, 49 auf, wie insbesondere in der Fig. 8 dargestellt ist. Diese Gesenke 47, 48 und 49 eignen sich zur Aufnahme von mit den Leiterenden zu vercrimpenden Kontaktelementen, die beispielsweise Aderendhülsen sein können. Die Gesenke 47, 48, 49 können unterschiedlich groß sein, um unterschiedlich große Aderendhülsen für Leiter mit unterschiedlich großen Querschnitten verwenden zu können. Vorzugsweise sind die Gesenke 47, 48, 49 am Umfang unter gleichen Winkelabständen angeordnet.

Die Fig. 9 zeigt eine Seitenansicht der Crimptrommel 18 mit Blick auf das Gesenk 47. Wie zu erkennen ist, weist die Crimptrommel 18 an ihrer linken bzw. Vorderseite Vorsprünge 50 auf, die den jeweiligen Gesenken zugeordnet sind. Diese Vorsprünge 50 dienen zur Arretierung der Crimptrommel 18, wenn das jeweils zugeordnete Gesenk in einer Ladeposition liegt, in der es z. B. eine Aderendhülse aufnehmen kann. Die Crimptrommel 18 ist von Hand drehbar, wozu der Zangenkörper 2 im Umfangsbereich der Crimptrommel 18 mit einer entsprechenden Ausnehmung versehen sein kann. Die vorderseitigen Vorsprünge 50 werden mit Hilfe der bereits genannten Federkraft in entsprechende Ausnehmungen gedrückt, so daß dadurch eine gewisse Positionsstabilisierung der Crimptrommel 18 erhalten wird.

Die Drehung der Crimptrommel 18 zur Arretierung eines Gesenks in der Ladeposition ist jederzeit möglich, wobei in diesem Zustand die Crimptrommel 18 noch nicht mit der Antriebseinrichtung 21 gekoppelt wird. Zwar werden bei Drehung der Crimptrommel 18 von Hand die Vorsprünge 50 (Arretiernasen) entgegen der Federkraft aus den sie aufnehmenden Öffnungen herausgedreht, jedoch weisen die Vorsprünge 50 nur eine so geringe Höhe auf, daß dabei keine so große Axialverschiebung der Crimptrommel 18 auftritt, als daß eine Kopplung mit der Antriebseinrichtung stattfinden könnte. Die Crimptrommel 18 läßt sich sozusagen voreinstellen, um Aderendhülsen bestimmter Größe verarbeiten zu können.

Weiterhin weist die Crimptrommel 18 an ihrem Umfang zusätzliche Ausnehmungen 51 auf, die in vorgegebenen Winkelabständen zu den Gesenken liegen, wobei in die zusätzlichen Ausnehmungen 51 ein noch zu beschreibender Crimpstempel einfährt, wenn sich ein Gesenk 47 bis 49 in der Ladeposition befindet.

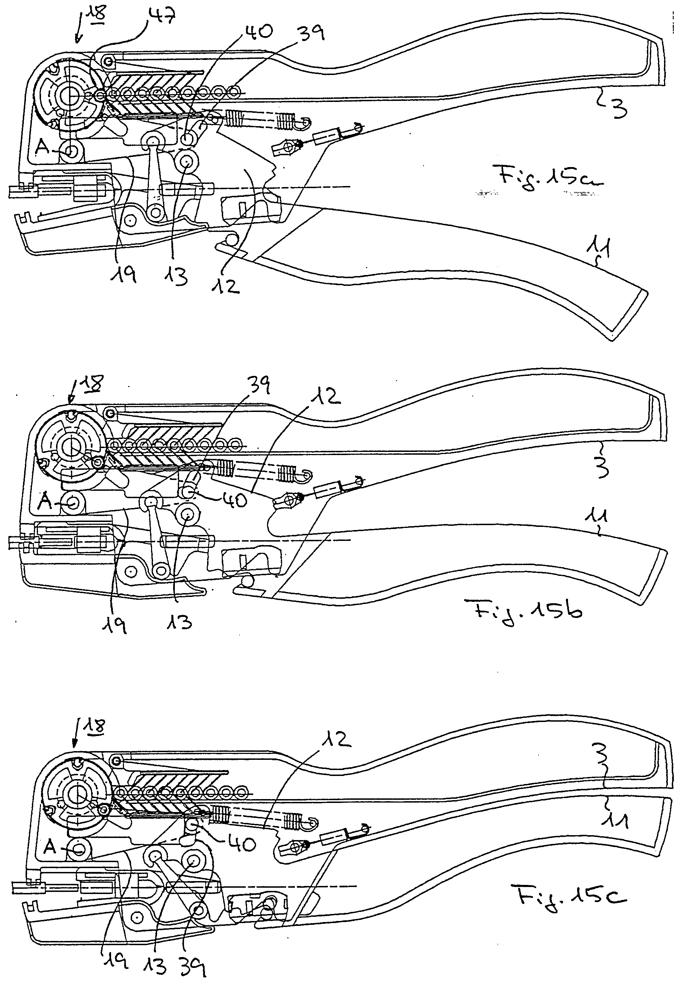

Die Fig. 8 zeigt am besten, daß jedes Gesenk an der der Leitereinführseite (Vorderseite) gegenüberliegenden Rückseite der Crimptrommel 18 mit einer den Umfang der Crimptrommel 18 überragenden Arretierlasche 52 abgeschlossen ist. Wird ein Leiter von der Leitereinführseite (von vorn in Fig. 8) in ein Gesenk 47 bis 49 hineingesteckt, so gelangt dessen Spitze gegen die Arretierlasche 52, was dazu führt, daß bei entsprechendem Druck die gesamte Crimptrommel 18 axial nach hinten verschoben wird. Bei anschließender Drehung der Crimptrommel 18 (die dann mit der Antriebseinrichtung gekoppelt ist) greifen die Arretierlaschen 52 hinter gehäusefeste Arretierwände 53, wie sie z. B. in Fig. 13 zu erkennen sind. Die Axialverschiebung der Crimptrommel 18 läßt sich somit für eine gewisse Zeit arretieren. Ist der Crimpvorgang abgeschlossen, so wird die Crimptrommel 18 zurückgedreht, was bedeutet, daß die Arretierlaschen wieder freikommen, so daß die Crimptrommel 18 infolge der Federkraft wieder nach vorn axial verschoben wird.

An der Rückseite der Crimptrommel 18 sind in vorbestimmtem Winkelabstand zu den Gesenken 47 bis 49 axial verlaufende Vorsprünge 54 vorhanden, wie z. B. die Fig. 7 und 8 zeigen. Wird die Crimptrommel 18 durch Einsetzen eines Leiterendes in ein Gesenk 47 bis 49 axial nach hinten verschoben, so hintergreifen nicht nur die Arretierlaschen 52 die Arretierwände 53, sondern es gelangen gleichzeitig auch die Vorsprünge 54 in Eingriff mit einem Vertikalschlitz 55 am anderen Ende des Transporthebels 20. Dies ist am besten in Fig. 7 erkennen. Da jetzt die Crimptrommel 18 in ihrer rückwärtigen Axialposition arretiert ist, und zwar infolge der Wirkung der Elemente 52 und 53, kann jetzt die Crimptrommel 18 mit Hilfe des Antriebsteils 12 über den Transporthebel 20 gedreht werden. Der Genaue Bewegungsablauf wird später unter Bezugnahme auf die Fig. 15a bis 15c näher beschrieben. Zusammenfassend ergibt sich jedoch beim Zusammendrücken der Handgriffe 3 und 11 und beim darauffolgenden Spreizvorgang eine Bewegung der Crimptrommel 18, bei der zunächst ein Gesenk aus der Ladeposition in eine Crimpposition gedreht und anschließend wieder in die Ladeposition zurückgedreht wird. Im vorliegenden Beispiel sind drei Gesenke für Kontaktelemente bzw. Aderendhülsen vorgesehen. Beispielsweise können die jeweiligen Gesenke Aderendhülsen für Querschnittsgrößen von 0,5/0,75 bzw. 1/1,5 bzw. 2,5 mm aufnehmen. Damit das Leiterende der Drehbewegung der Crimptrommel 18 folgen kann, befindet sich in der Wand des Zangenkörpers 2 ein entsprechender kreissegmentartiger Schlitz.

Die Fig. 12 zeigt den detaillierten Aufbau des Transporthebels 20. Er besteht aus einer schlüsselförmig ausgebildeten Platte, die an ihrem vorderen Ende den Vertikalschlitz 55 aufweist und an ihrem hinteren Ende einen abgewinkelten Führungsschlitz 42, dessen Öffnungswinkel zum Vertikalschlitz 55 gerichtet ist. Der Transporthebel 20 kann zwischen der Rückwand des Zangenkörpers 2 und der hinteren Seite des Wandelements 12b geführt sein.

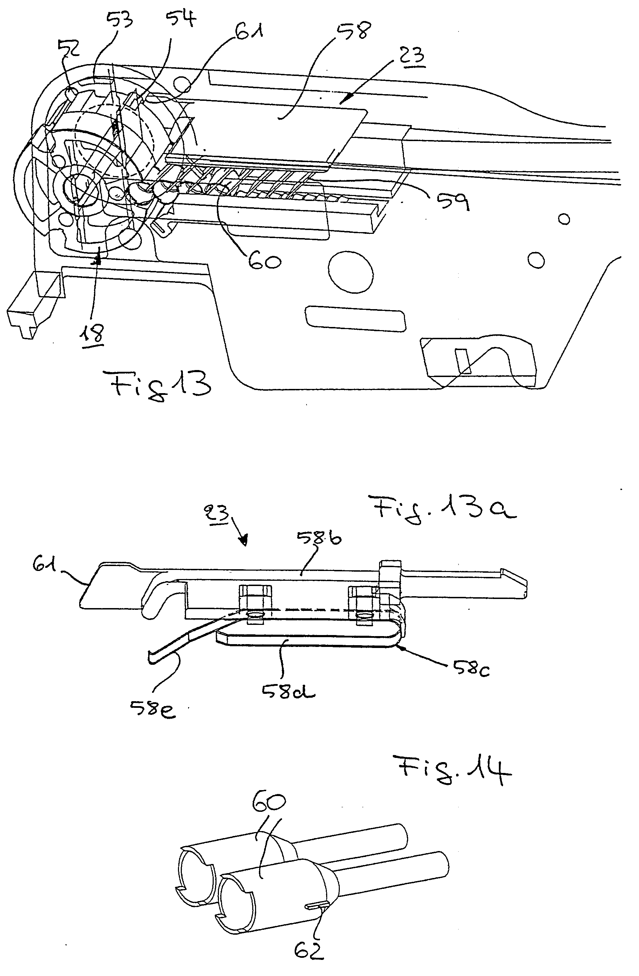

In den Fig. 10 und 11 ist der genaue Aufbau des bereits zuvor erwähnten Crimphebels 19 gezeigt. Der Crimphebel 19 trägt einen Crimpstempel 56, der in geeigneter Weise an ein zu vercrimpendes Element herangeführt wird, wenn dieses durch die Crimptrommel 18 in die Crimpposition gebracht worden ist. Hierzu weist der Crimphebel 19 an seinem unteren Ende eine Lagereinrichtung 57 auf, über die er im Zangenkörper 2 schwenkbar gelagert ist. Die Lagereinrichtung 57 kann beispielsweise ein verstärkter Hohlzylinder sein, durch welchen eine Achse A hindurchläuft (Fig. 4), die am Zangenkörper 2 befestigt ist. Der Crimphebel 19 ist dann um diese Achse A schwenkbar.

An dem der Lagereinrichtung 57 gegenüberliegenden Ende des Crimphebels 19 ist dieser mit dem bereits erwähnten Zapfen 40 versehen, der parallel zur Achse der Lagereinrichtung 57 verläuft. Mit diesem Zapfen 40 greift der Crimphebel 19 in die abgewinkelte Führungsbahn 39, die sich innerhalb des Antriebsteils 12 befindet, genauer gesagt innerhalb beider Wandbereiche 12a und 12b. Hierdurch wird eine besonders stabile Verbindung zwischen Antriebsteil 12 und Crimphebel 19 erzielt.

Die Fig. 13 zeigt eine perspektivische Ansicht der Crimptrommel 18 mit angeschlossener Vorrats- und Transporteinrichtung 23 für Aderendhülsen. Die Crimptrommel 18 befindet sich hier in der Ladeposition.

Die Vorrats- und Transporteinrichtung 23 weist eine Transportplatte 58 auf, die auf die Crimptrommel zu und von der Crimptrommel weg bewegbar ist. An der unteren Seite der Transportplatte 58 sind in Richtung zur Crimptrommel 18 vorstehende Laschen oder Kunststofflaschen oder aber Bürsten 59 vorgesehen, die die Aderendhülsen, hier mit dem Bezugszeichen 60 versehen, in Richtung zur Crimptrommel 18 bewegen, wenn die Transportplatte 58 auf die Crimptrommel 18 zu bewegt wird. Die Transportplatte 58 ist mit Hilfe einer nicht dargestellten Feder in Richtung zur Crimptrommel 18 vorgespannt. Diese Feder kann z. B. zwischen der Transportplatte 58 und der Seitenwand des Zangenkörpers 2 angeordnet sein.

Wird die Crimptrommel 18 mit Hilfe eines Leiterendes axial so verschoben, daß die Arretierlasche 52 hinter die Arretierwand 53 gelangt, und wird dann die Crimptrommel 18 aus der Ladeposition in die Crimpposition gedreht, so nimmt ein obenliegender der Vorsprünge 54 die Transportplatte 58 mit, drückt diese mit anderen Worten von der Crimptrommel 18 weg, und zwar über eine Auflaufschräge 61 für den Vorsprung 54. Diese Auflaufschräge 61 ist auch in Fig. 7 gut zu erkennen. Wird die Transportplatte 58 durch den Vorsprung 54 von der Crimptrommel 18 weg bewegt, so wird die zwischen ihr und dem Zangenkörper 2 liegende Spannfeder 58a gespannt, so daß dann, wenn die Crimptrommel 18 wieder ihre Ladeposition erreicht hat und sie wieder axial nach vorne verschoben worden ist, die Transportplatte 58 über die genannte Spannfeder 58a zur Crimptrommel 18 bewegt wird und eine nächste Aderendhülse 60 in das in Ladeposition befindliche Gesenk schiebt. Die Auflaufschräge 61 liegt jetzt frei, da der Vorsprung 54 durch Axialverschiebung der Crimptrommel 18 nach vorn von der Auflaufschräge 61 abgenommen worden ist. Ein elastisches Element 68 dient zur Rückführung der Aderendhülsen in ihre axiale Ausgangsposition.

Die Fig. 13a zeigt eine weitere Ausgestaltung der Vorratsund Transporteinrichtung 23. Statt der Laschen bzw. Bürsten trägt hier die Transportplatte 58b an ihrer Unterseite ein elastisches Federelement 58c, das z. B. aus Federstahl oder Kunststoff hergestellt ist. Das elastische Federelement 58c weist einen Horizontalarm 58d auf, der auf dem Aderendhülsengurt zu liegen kommt und die Aderendhülsen 60 gegen ihre Unterlage 3a drückt. Ein schräg von oben nach vorne bzw. in Richtung zur Crimptrommel 18 verlaufender Arm 58e des Federelements 58c greift dagegen in den Bereich zwischen der zur Crimptrommel 18 am nächsten liegenden Aderendhülse 60 und der folgenden Aderendhülse, um die zuerst genannte Aderendhülse in das in Ladeposition befindliche Gesenk zu schieben, wenn das Federelement 58c mit der Transportplatte 58b auf die Crimptrommel 18 zu bewegt wird. Bei entgegengesetzter Bewegung der Transportplatte 58b gleitet der Horizontalarm 58d über die Aderendhülsen hinweg, ohne sie mitzunehmen. Der Arm 58e und der Horizontalarm 58d können auch als getrennte Elemente vorhanden sein.

Die Aderendhülsen selbst sind in Fig. 14 vergrößert dargestellt. Sie sind gurtförmig aneinandergekettet und liegen parallel nebeneinander. Ein Verbindungssteg zwischen benachbarten Aderendhülsen 60 trägt das Bezugszeichen 62. Dieser Verbindungssteg 62 wird durch ein Messer 63 zerschnitten, das beispielsweise in Fig. 8 deutlich zu erkennen ist. Sobald die Crimptrommel 18 aus der Ladeposition in die Crimpposition gedreht wird, wird die im Gesenk 47 liegende Aderendhülse 60 nach unten bewegt, so daß der Verbindungssteg 62 über das Messer 63 gezogen und von diesem zerschnitten wird.

Nachfolgend wird die Funktionsweise der Zange 1 beim Crimpen näher beschrieben. Hierzu wird auf die Fig. 1, 4 und 15 Bezug genommen. Die Fig. 15 zeigt die Zange bei vollständig gespreizten Handgriffen (Fig. 15a), bei halb zusammengedrückten Handgriffen (Fig. 15b) und bei vollständig zusammengedrückten Handgriffen (Fig. 15c). In den Fig. 1 und 15a befindet sich die Crimptrommel 18 in der Ladeposition, während sie sich in den Fig. 4 und 15b sowie 15c in der Crimpposition befindet.

Wird zunächst ein Leiterende in das Gesenk 47 hineingesteckt, das sich in der Ladeposition befindet, so wird dadurch die Crimptrommel 18 axial nach hinten verschoben, und zwar entgegen einer Federkraft. Dabei gelangt die Arretierlasche 52 in eine Axialposition, die hinter der Axialposition der Arretierwand 53 liegt. Gleichzeitig gelangt der Vorsprung 54, der dem in Ladeposition befindlichen Gesenk 47 zugeordnet ist, in Eingriff mit dem Vertikalschlitz 55 des Transporthebels 20. Werden jetzt die Handgriffe 3 und 11 aufeinander zu bewegt, so gelangt die Arretierlasche 52 hinter die Arretierwand 53 und arretiert somit die Axialposition der Crimptrommel 18. Gleichzeitig bewegt sich das Gesenk 47 aus der Ladeposition in Richtung auf die Crimpposition.

Beim Zusammendrücken der Handgriffe 11 und 3 wird das Antriebsteil 12 um den Lagerzapfen 13 gedreht, und zwar in den Figuren entgegen der Uhrzeigerrichtung. Dabei wird zunächst der Transporthebel 20 in Richtung zur Crimptrommel 18 verschoben, da der Zapfen 41 abweichend von der in Fig. 4 gezeigten Stellung im oberen Bereich der winkelförmig ausgebildeten Führung 42 liegt. Das heißt, daß zunächst eine Drehung der Crimptrommel 18 durch die Bewegung des Transporthebels 20 erfolgt. Dabei gelangt das Gesenk 47 aus der Ladeposition in die Crimpposition (Fig. 15b), bevor eine Drehung des Crimphebels 19 erfolgt. Während der Zeit, in der sich die Crimptrommel um die vorgenannte Strecke dreht, bewegt sich der Zapfen 40 innerhalb der winkelförmigen Führung 39 nur im horizontal liegenden Ast, so daß Crimphebel 19 bei der Bewegung des Antriebsteils 12 nicht mitgenommen wird.

Werden nach Erreichen der Crimpposition durch das Gesenk 47 (Fig. 15b) die Handgriffe 3 und 11 weiter zusammengedrückt (Fig. 15c), so läuft jetzt der Zapfen 40 des Crimphebels 19 im vertikalen Ast der Führung 39 nach oben, so daß der Crimphebel 19 um seine Lagerachse A entgegen der Uhrzeigerrichtung gedreht wird. Dabei wird der Crimpstempel 56 in die Aderendhülse gedrückt, die sich zu diesem Zeitpunkt in der Crimpposition befindet.

Während dieses letzten Teils der Bewegung der Handgriffe 3 und 11 läuft der Zapfen 41 (siehe Fig. 4) im unteren Zweig der Führung 42, und zwar von der Mitte nach unten, so daß der Transporthebel nicht weiterbewegt wird. Wird also der Crimpstempel 56 gegen die Aderendhülse gedrückt, so bleibt die Crimptrommel 18 in Ruhe.

Der Crimpzustand, bei dem die Handgriffe 3 und 11 vollständig zusammengedrückt sind, ist in Fig. 4 gezeigt.

Werden die Handgriffe 3 und 11 entlastet, so versucht die Feder 14, die Handgriffe 3 und 11 zu spreizen. Die Feder 14 zieht also den Antriebsteil 12 in Uhrzeigerrichtung um den Lagerzapfen 13. Dabei läuft einerseits der Zapfen 41 im unteren Zweig der Führung 42 bis in deren mittleren Bereich, ohne daß dadurch der Transporthebel 20 zurückbewegt wird. Die Crimptrommel 18 bleibt also zunächst in Ruhe. Andererseits läuft dagegen während dieser ersten Spreizphase der Zapfen 40 im vertikalen Ast der Führung 39 nach unten, so daß der Crimphebel 19 in Uhrzeigerrichtung um die Lagerachse 58 gedreht wird. Der Crimpstempel 46 wird daher von der Crimptrommel 18 abgenommen. Befinden sich der Zapfen 41 im mittleren Bereich der Führung 42 und der Zapfen 40 im unteren Bereich des vertikalen Astes der Führung 39, so beginnt die nächste Bewegungsphase. Jetzt läuft nämlich der Zapfen 41 in den oberen Bereich der Führung 42 und zieht dadurch den Transporthebel 20 in Richtung zu den Handgriffen 3 und 11 zurück. Über den Vertikalschlitz 55 wird damit der Zapfen 54 mitgenommen, was eine Drehung der Crimptrommel 18 entgegen der Uhrzeigerrichtung zur Folge hat. Das Gesenk 47 wird somit wieder in die Ladeposition zurückgeführt. Während dieser zweiten Bewegungsphase bleibt der Crimphebel 19 praktisch in Ruhe, da jetzt der Zapfen 40 nur noch im horizontalen Zweig der Führung 39 verläuft.

Sobald das Gesenk 47 seine Ladeposition erreicht hat, der Transporthebel 20 also vollständig nach rechts in Fig. 4 zurückgezogen worden ist, kommt die Arretierungslasche 52 von der Arretierungswand 53 frei, so daß die Crimptrommel 18 wieder nach vorne gedrückt wird, und zwar aufgrund der zwischen ihr und der Rückwand des Zangenkörpers 2 angeordneten Feder. Dabei wird auch der Vorsprung 54 aus dem Vertikalschlitz 55 herausgenommen, so daß keine Kopplung mehr zwischen Transporthebel 20 und Crimptrommel 18 vorhanden ist. Gleichzeitig wird durch die Rückbewegung der Crimptrommel 18, also durch die axiale Rückverschiebung, die Auflaufschräge 61 freigegeben, da auch der auf ihr liegende Vorsprung 54 zurückgezogen wird. Die Transportplatte 58 kann somit infolge Federantriebs eine weitere Aderendhülse in das in Ladeposition befindliche Gesenk einschieben. Eine Zugfeder zwischen Zangenkörper 2 und Transportplatte 58 trägt beispielsweise das Bezugszeichen 58a in Fig. 4.

Es sei darauf hingewiesen, daß infolge der Drehung die Crimptrommel 18 in und entgegengesetzt zur Uhrzeigerrichtung nach jedem Bewegungszyklus wieder in die axiale Ausgangsposition zurückgeführt wird, also von der Antriebseinrichtung bzw. dem Transporthebel 20 entkoppelt wird.

Wird die Crimptrommel 18 nicht durch ein Leiterende axial verschoben, so erfolgt keine Kopplung zwischen Vorsprung 54 und Transporthebel 20. Beim Zusammenführen der Handgriffe 3 und 11 laufen trotzdem dieselben Vorgänge ab, wie oben beschrieben. Einerseits wird auch jetzt der Transporthebel 20 hin- und herbewegt, während andererseits der Crimphebel 19 um seine Schwenkachse A geschwenkt wird. Der Crimpstempel 56 wird also immer in die Crimpposition gefahren, auch wenn sich das Gesenk in der Ladeposition befinden sollte. Um für diesen Fall eine Beschädigung der Crimptrommel zu vermeiden, weist sie zusätzliche Ausnehmungen in ihrer Oberfläche auf, die in Fig. 8 das Bezugszeichen 51 tragen. Diese Ausnehmungen befinden sich in der Crimpposition, wenn sich das zugeordnete Gesenk in der Ladeposition befindet. Der Crimpstempel 56 kann daher auch im zuletztgenannten Fall seine volle Bewegung ausführen. Wesentlich ist, daß bei nicht benötigter Crimptrommel, wenn also kein Crimpvorgang durchgeführt werden soll, die Crimptrommel nicht mitgedreht wird, da für ihre Drehung sehr viel mehr Kraft aufgewendet werden muß als für die Bewegung von Transporthebel 20 und Crimphebel 19.

## Patentansprüche

1. Zange zum Bearbeiten von Leiterenden, mit zwei relativ zueinander bewegbaren Handgriffen (3, 11), wenigstens einer Bearbeitungsstation (4, 8) und einer Antriebseinrichtung (10, 12, 20), über die bei Betätigung der Handgriffe die Bearbeitungsstation antreibbar ist, **dadurch gekennzeichnet**, daß wenigstens eine weitere, über die Antriebseinrichtung (10, 12, 20) antreibbare Bearbeitungsstation (18, 19) vorhanden ist, und wenigstens eine (18, 19) der Bearbeitungsstationen (4, 8; 18, 19) mit Hilfe des zu bearbeitenden Leiterendes (28) mit der Antriebseinrichtung (10, 12, 20) kuppelbar ist.

2. Zange nach Anspruch 1, **dadurch gekennzeichnet**, daß die mit der Antriebseinrichtung kuppelbare Bearbeitungsstation (18, 19) nur über jeweils einen Bearbeitungsvorgang mit dieser kuppelbar ist.

3. Zange nach Anspruch 1 oder 2, **dadurch gekennzeichnet**, daß die mit der Antriebseinrichtung kuppelbare Bearbeitungsstation eine Crimpstation (18, 19) ist.

4. Zange nach Anspruch 3, **dadurch gekennzeichnet**, daß die Crimpstation (18, 19) eine drehbar gelagerte Crimptrommel (18) aufweist, die an ihrem Umfang eine Mehrzahl von in Axialrichtung verlaufenden Gesenken (47 bis 49) zur Aufnahme von mit den Leiterenden zu vercrimpenden Kontaktelementen (22, 60) unterschiedlicher Größe besitzt und in Axialrichtung verschiebbar ist.

5. Zange nach Anspruch 4, **dadurch gekennzeichnet**, daß jedes Gesenk (47 bis 49) an der einer Leitereinführseite gegenüberliegenden Rückseite der Crimptrommel (18) mit einer den Umfang der Crimptrommel (18) überragenden Arretierlasche (52) abgeschlossen ist.

6. Zange nach Anspruch 5, **dadurch gekennzeichnet**, daß gehäusefeste Arretierwände (53) vorgesehen sind, hinter die die Arretierlaschen (52) nach Axialverschiebung und Drehung der Crimptrommel (18) greifen.

7. Zange nach einem der Ansprüche 4 bis 6, **dadurch gekennzeichnet**, daß die Crimptrommel (18) an ihrer Rückseite mit axial verlaufenden Vorsprüngen (54) versehen ist, von denen einer bei Axialverschiebung der Crimptrommel (18) mit einem Transporthebel (20) der Antriebseinrichtung in Eingriff bringbar ist.

8. Zange nach einem der Ansprüche 4 bis 7, **dadurch gekennzeichnet**, daß die Crimptrommel (18) vor- und zurückdrehbar ist, um ein Gesenk (47 bis 49) aus einer Ladeposition in eine Crimpposition, in der es einem Crimpstempel (56) gegenüberliegt, und wieder in die Ladeposition zu bringen.

9. Zange nach Anspruch 8, **dadurch gekennzeichnet**, daß die Crimptrommel (18) an ihrem Umfang weitere Ausnehmungen (51) aufweist, in die der Crimpstempel (56) einfährt, wenn sich ein Gesenk (47 bis 49) in der Ladeposition befindet.

10. Zange nach einem der Ansprüche 4 bis 9, **dadurch gekennzeichnet**, daß die Crimptrommel (18) in Richtung ihrer Leitereinführseite vorgespannt ist und dort Arretiernasen (50) aufweist, um ein Gesenk (47 bis 49) in seiner Ladeposition zu arretieren.

11. Zange nach einem der Ansprüche 3 bis 10, **dadurch gekennzeichnet**, daß der obere Handgriff (3) hohlraumförmig ausgebildet und einstückig mit einem vorderen Zangenkörper (2) verbunden ist, in welchem sich die Crimpstation (18, 19) befindet.

12. Zange nach Anspruch 11, **dadurch gekennzeichnet**, daß der untere Handgriff (11) einstückig mit einem Antriebsteil (12) der Antriebseinrichtung verbunden und über dieses Antriebsteil (12) schwenkbar am Zangenkörper (2) gelagert ist.

13. Zange nach Anspruch 12, **dadurch gekennzeichnet**, daß der Transporthebel (20) für die Drehung der Crimptrommel (18) mit dem Antriebsteil (12) in Eingriff steht.

14. Zange nach einem der Ansprüche 8 bis 13, **dadurch gekennzeichnet**, daß der Crimpstempel (56) an einem Crimphebel (19) befestigt ist, welcher mit seinem einen Ende am vorderen Zangenkörper (2) schwenkbar gelagert ist und mit seinem anderen Ende mit dem Antriebsteil (12) in Eingriff steht.

15. Zange nach Anspruch 13 und 14, **dadurch gekennzeichnet**, daß Transporthebel (20) und Crimphebel (19) jeweils über in abgewinkelte Führungsbahnen (42; 39) eingreifende Zapfen (41; 40) mit dem Antriebsteil (12) in Eingriff stehen.

16. Zange nach einem der Ansprüche 12 bis 15, **dadurch gekennzeichnet**, daß zwischen Antriebsteil (12) und oberem Handgriff (3) bzw. Zangenkörper (2) wenigstens eine Zugfeder (14) gespannt ist, um die Handgriffe (3, 11) in Spreizstellung vorzuspannen.

17. Zange nach einem der Ansprüche 11 bis 16, **dadurch gekennzeichnet**, daß oberer Handgriff (3) und Zangenkörper (2) einen Vorratsraum für die Kontaktelemente (22, 60) bilden.

18. Zange nach Anspruch 17, **dadurch gekennzeichnet**, daß die Kontaktelemente bandförmig aneinandergereihte Aderendhülsen (60) sind.

19. Zange nach Anspruch 18, **dadurch gekennzeichnet**, daß in der Nähe des Umfangsrandes der Crimptrommel (18) ein Messer (63) positioniert ist, um eine in ein Gesenk (47 bis 49) eingeführte Aderendhülse (22, 60) von den anderen abzutrennen, wenn das Gesenk (47 bis 49) aus der Ladeposition in die Crimpposition geführt wird.

20. Zange nach Anspruch 18 oder 19, **dadurch gekennzeichnet**, daß zur Zuführung der Aderendhülsen (22, 60) in ein Gesenk (47 bis 49) einer der rückseitigen Vorsprünge (54) dient, welcher bei Drehung des Gesenks in die Crimpposition eine in Richtung der Crimptrommel (18) vorgespannte und die Aderendhülsen (60) in dieser Richtung mitnehmende Transporteinrichtung (23) über eine Auflaufschräge (61) von der Crimptrommel (18) wegdrückt.

21. Zange nach einem der Ansprüche 1 bis 20, **dadurch gekennzeichnet**, daß die andere der Bearbeitungsstationen eine Abisolierstation (4, 8, 24, 25) ist.

22. Zange nach Anspruch 21, **dadurch gekennzeichnet**, daß die Abisolierstation (4, 8, 24, 25) am unteren Teil des Zangengehäuses (2) eine feststehende Klemmbacke (4) sowie eine bewegliche Klemmbacke (8) aufweist, die am vorderen Ende des unteren Handgriffs (11) mittels eines Lagerzapfens (7) schwenkbar gelagert ist.

23. Zange nach Anspruch 22, **dadurch gekennzeichnet**, daß die bewegliche Klemmbacke (8) eine den Lagerzapfen (7) nach hinten überragende Steuerfläche (9, 9a) aufweist, auf der ein Ende eines Gelenkhebels (10) entlanggleitet, dessen anderes Ende an einer Stelle mit dem Antriebsteil (12) in Eingriff steht, die bezüglich der Lagerung des unteren Handgriffs (11) am Zangenkörper (2) vorn liegt.

24. Zange nach Anspruch 23, **dadurch gekennzeichnet**, daß zwischen den Klemmbacken (4, 8) ein Zugelement (26) mit Schneid- und Abstreifbacken (24, 25) geführt ist, welches an einer nach hinten weisenden Verlängerung einen zur Steuerfläche (9) weisenden Ansatz (A) besitzt, welcher durch das Ende des Gelenkhebels (10) beaufschlagt ist, das auf der Steuerfläche (9, 9a) entlanggleitet.

25. Zange nach Anspruch 24, **dadurch gekennzeichnet**, daß das Zugelement (26) seitliche Führungsbolzen (32, 33) aufweist, die in Längsnuten (34) des Zangenkörpers (2) geführt sind.

26. Zange nach Anspruch 25, **dadurch gekennzeichnet**, daß die nach hinten weisende Verlängerung des Zugelements (26) mit einem nachgiebigen Teil (35) versehen ist, der sich zur Rückführung des Zugelements (26) in seine Ausgangslage an einem Stützelement (S) abstützt, welches am unteren Handgriff (11) befestigt ist.

27. Zange nach einem der Ansprüche 24 bis 26, **dadurch gekennzeichnet**, daß das Zugelement (26) aus einem einstückigen Kunststoffteil besteht.

## Claims

1. Tongs for dressing conductor ends, having two handles (3, 11) , which can move relative to one another, at least one dressing station (4,8), and a drive device (10, 12, 20) via which the dressing station can be driven during operation of the handles, -characterised in that there is at least one further dressing station (18, 19) which can be driven via the drive device (10, 12, 20), and at least one (18, 19) of the dressing stations (4, 8; 18, 19) can be coupled to the drive device (10, 12, 20) with the aid of the conductor end (28) to be dressed.

2. Tongs according to Claim 1, characterised in that the dressing station (18, 19) which can be coupled to the drive device can be coupled thereto only over in each case one dressing process.

3. Tongs according to Claim 1 or 2, characterised in that the dressing station which can be. coupled to the drive device is a crimping station (18, 19).

4. Tongs according to Claim 3, characterised in that the crimping station (18, 19) has a crimping drum (18) which is supported such that it can rotate, has a plurality of depressions (47 to 49) running in the axial direction on its circumference for holding contact elements (22, 60) of different size which are to be crimped to the conductor ends, and can be displaced in the axial direction.

5. Tongs according to Claim 4, characterised in that each depression (47 to 49) is terminated on the rear side of the crimping drum (18) opposite a conductor insertion side with a locking lug (52) which projects beyond the circumference of the crimping drum (18).

6. Tongs according to Claim 5, characterised in that locking walls (53) which are fixed to the housing are provided, behind which the locking lugs (52) engage after axial displacement and rotation of the crimping drum (18).

7. Tongs according to one of Claims 4 to 6, characterised in that the crimping drum (18) is provided on its rear side with axially running projections (54), one of which can be engaged with a transportation lever (20) of the drive device during axial displacement of the crimping drum (18).

8. Tongs according to one of Claims 4 to 7, characterised in that the crimping drum (18) can be rotated to the front and to the rear in order to move a depression (47 to 49) out of a loading position into a crimping position in which it is opposite a crimping stamp (56), and back into the loading position.

9. Tongs according to Claim 8, characterised in that the crimping drum (18) has further recesses (51) on its circumference, into which further recesses the crimping stamp (56) moves when a depression (47 to 49) is located in the loading position.

10. Tongs according to one of Claims 4 to 9, characterised in that the crimping drum (18) is pretensioned in the direction of its conductor insertion side and has locking tabs (50) there in order to lock a depression (47 to 49) in its loading position.

11. Tongs according to one of Claims 3 to 10, characterised in that the upper handle (3) is constructed in the form of a cavity and is integrally connected to a front tongs body (2) in which the crimping station (18, 19) is located.

12. Tongs according to Claim 11, characterised in that the lower handle (11) is integrally connected to a drive part (12) of the drive device and is supported on the tongs body (2) via this drive part (12) such that it can pivot.

13. Tongs according to Claim 12; characterised in that the transportation lever (20) engages with the drive part (12) for rotation of the crimping drum (18).

14. Tongs according to one of Claims 8 to 13, characterised in that the crimping stamp (56) is attached to a crimping lever (19) which is supported on the front tongs body (2) with its one end, such that it can pivot, and engages with the drive part (12) with its other end.

15. Tongs according to Claims 13 and 14, characterised in that the transportation lever (20) and the crimping lever (19) engage with the drive part (12) in each case via pins (41; 40) which engage in angled guide tracks (42; 39).

16. Tongs according to one of Claims 12 to 15, characterised in that at least one tension spring (14) is tensioned between the drive part (12) and the upper handle (3) or tongs body (2) in order to pretension the handles (3, 11) in the opened position.

17. Tongs according to one of Claims 11 to 16, characterised in that the upper handle (3) and tongs body (2) form a supply space for the contact elements (22, 60).

18. Tongs according to Claim 17, characterised in that the contact elements are core end sleeves (60) which are arranged in a row one on top of the other in the form of a strip.

19. Tongs according to Claim 18, characterised in that a blade (63) is positioned in the vicinity of the circumferential edge of the crimping drum (18) in order to cut a core end sleeve (22, 60) which is inserted in a depression (47 to 49) off from the others when the depression (47 to 49) is moved out of the loading position into the crimping position.

20. Tongs according to Claim 18 or 19, characterised in that one of the projections (54) on the rear side is used for feeding the core end sleeves (22, 60) into a depression (47 to 49), which projection, on rotation of the depression into the crimping position, pushes a transportation device (23), which is pretensioned in the direction of the crimping drum (18) and takes the core end sleeves (60) with it in this direction, back from the crimping drum (18) over an inclined surface (61).

21. Tongs according to one of Claims 1 to 20, characterised in that the other of the dressing stations is a stripping station (4, 8, 24, 25).

22. Tongs according to Claim 21, characterised in that the stripping station (4, 8, 24, 25) has a stationary clamping jaw (4) on the lower part of the tongs housing (2) as well as a moving clapimg jaw (8) which is supported on the front end of the lower handle (11), by means of a bearing pin (7), such that it can pivot.

23. Tongs according to Claim 22, characterised in that the moving clamping jaw (8) has a control surface (9, 9a) which projects beyond the bearing pin (7) at the rear and on which one end of a jointed lever (10) slides along whose other end engages with the drive part (12) at a point which is located on the tongs body (2) at the front with respect to the bearing of the lower handle (11).

24. Tongs according to Claim 23, characterised in that a tension element (26) having cutting and stripping jaws (24, 25) is guided between the clamping jaws (4, 8), which tension element (26) has a projection (A) pointing towards the control surface (9) on an extension pointing to the rear, which projection (A) is acted on by the end of the jointed lever (10) which slides along the control surface (9, 9a).

25. Tongs according to Claim 24, characterised in that the tension element (26) has lateral guide bolts (32, 33) which are guided in longitudinal grooves (34) in the tongs body (2).

26. Tongs according to Claim 25, characterised in that the extension of the tension element (26) pointing to the rear is provided with a flexible part (35) which in its original position is supported on a supporting element (S) in order to guide the tension element (26) back, which supporting element is attached to the lower handle (11).

27. Tongs according to one of Claims 24 to 26, characterised in that the tension element (26) consists of an integral plastic part.

## Revendications

1. Pince de traiter des extrémités de conducteur, munie de deux poignées susceptibles de se déplacer relativement l'une par rapport à l'autre (3, 11), d'au moins un poste de traitement (4, 8) et un organe d'entraînement (10, 12, 20) au moyen duquel, par l'actionnement des poignées, le poste de traitement est susceptible d'être actionnée, caractérisée en ce qu'elle comporte au moins un poste de traitement supplémentaire (18, 19) susceptible d'être actionnée par l'organe d'actionnement (10, 12, 20) et en ce qu'au moins l'un (18, 19) des postes de traitement (4, 8; 18, 19) est susceptible d'être couplé, à l'aide de l'extrémité de conducteur à traiter (28) à l'organe d'actionnement (10, 12, 20).

2. Pince selon la revendication 1, caractérisée en ce que le poste de traitement susceptible d'être couplée à l'organe d'actionnement (18, 19) n'est susceptible d'être couplé à ce dernier qu'au moyen d'un seul procédé de traitement dans chaque cas.

3. Pince selon la revendication 1 ou 2, caractérisée en ce que le poste de traitement susceptible d'être couplé à l'organe d'actionnement est un poste de sertissage (18, 19).

4. Pince selon la revendication 4, caractérisée en ce que le poste de sertissage (18, 19) comporte un tambour de sertissage (18) monté tournant, qui présente, sur sa périphérie, une pluralité de matrices de sertissage (47 à 49) s'étendant dans sa direction axiale, et de tailles différentes pour recevoir des éléments de contact (22, 60) à sertir sur les extrémités de conducteur, et qui est susceptible de se déplacer dans la direction axiale.

5. Pince selon la revendication 4, caractérisée en ce que chaque évidement (47 à 49) est fermé sur la face arrière du tambour de sertissage (18) opposée au côté d'introduction des conducteurs, au moyen d'une languette d'arrêt (52) faisant saillie par rapport à la périphérie du tambour de sertissage (18).

6. Pince selon la revendication 5, caractérisée en ce qu'elle comporte des parois d'arrêt (53) solidaires du boîtier et derrière lesquelles les languettes d'arrêt (52) s'engagent, après déplacement axial et rotation du tambour de sertissage (18).

7. Pince selon l'une des revendications 4 à 6, caractérisée en ce que le tambour de sertissage (18) est muni, sur sa face arrière, de parties en saillie disposées axialement (54) et dont l'une est susceptible d'être amenée en contact avec un levier de transport (20) de l'organe d'actionnement lors d'un déplacement axial du tambour de sertissage (18).

8. Pince selon l'une des revendications 4 à 7, caractérisée en ce que le tambour de sertissage (18) est susceptible de tourner en avant et en arrière afin d'amener une matrice de sertissage (47 à 49) d'une position de chargement à une position de sertissage où elle se trouve en face d'un poinçon de sertissage (56) et de l'amener de nouveau à la position de chargement.

9. Pince selon la revendication 8, caractérisée en ce que le tambour de sertissage (18) présente sur sa périphérie des matrices supplémentaires (51) dans lesquels pénètre le poinçon de sertissage (56) quand une matrice de sertissage (47 à 49) se trouve dans la position de chargement.

10. Pince selon l'une des revendications 4 à 9, caractérisée en ce que le tambour de sertissage (18) est sollicité dans la direction de sa face d'introduction de conducteur en y présentant des ergots d'arrêt (50) afin d'arrêter une matrice de sertissage (47 à 49) dans sa position de chargement.

11. Pince selon l'une des revendications 3 à 10, caractérisée en ce que la poignée supérieure (3) est réalisée à structure creuse en étant reliée monobloc avec un corps de pince avant (2) dans lequel se trouve le poste de sertissage (18, 19).

12. Pince selon la revendication 11, caractérisée en ce que la poignée inférieure (11) est reliée monobloc à une partie d'entraînement (12) de l'organe d'actionnement en étant supportée de façon pivotante sur le corps de pince (2) au moyen de cette partie d'entraînement (12).

13. Pince selon la revendication 12, caractérisée en ce que le levier de transport (20) pour la rotation du tambour de sertissage (18) est en contact avec la partie d'entraînement (12).

14. Pince selon l'une des revendications 8 à 13, caractérisée en ce que le poinçon de sertissage (56) est fixé à un levier de sertissage (19) dont l'une des extrémités est portée de façon pivotante sur le corps de pince avant (2) et dont l'autre extrémité est en contact avec la partie d'entraînement (12).

15. Pince selon les revendications 13 et 14, caractérisée en ce que le levier de transport (20) et le levier de sertissage (19) sont respectivement en contact avec la partie d'entraînement (12) au moyen de tourillons (41; 40) qui pénètrent dans des voies de guidage incurvées (42; 39)

16. Pince selon l'une des revendications 12 à 15, caractérisée en ce que au moins un ressort de traction (14) est tendu entre la partie d'entraînement (12) et la poignée supérieure (3) ou, respectivement, le corps de pince (2) afin de solliciter les poignées (3, 11) dans la position d'écartement.

17. Pince selon l'une des revendications 11 à 16, caractérisée en ce que la poignée supérieure (3) et le corps de pince (2) constituent un espace de stockage pour les éléments de contact (22, 60).

18. Pince selon la revendication 17, caractérisée en ce que les éléments de contact sont des manchons d'extrémité de câble (60) disposés en rangées les uns aux côté des autres en forme de bande.

19. Pince selon la revendication 18, caractérisée en ce que, à proximité du bord périphérique du tambour de sertissage (18), est positionné un couteau (63) afin de séparer des autres un manchon d'extrémité de câble (22, 60) introduit dans une matrice de sertissage (47 à 49) , quand on fait passer la matrice de sertissage (47 à 49) de la position de chargement à la position de sertissage.

20. Pince selon la revendication 18 ou 19, caractérisée en ce que l'on utilise, pour amener les manchons d'extrémité de câble (22, 60) dans une matrice de sertissage (47 à 49), on utilise l'une des parties en saillies situées du côté arrière (54) qui, lors de la rotation de la matrice de sertissage dans la position de sertissage, pousse un organe de transport (23) qui est présollicité dans la direction du tambour de sertissage (18) et qui réalise le transport des manchons d'extrémité de câble (60) dans cette direction, via une surface oblique de butée (61), en l'éloignant du tambour de sertissage (18).

21. Pince selon l'une des revendications 1 à 20, caractérisée en ce que l'autre des postes de traitement est un poste de dégainage ou de dénudage de l'isolation (4, 8, 24, 25).

22. Pince selon la revendication 21, caractérisée en ce que le poste de dégainage (4, 8, 24, 25) présente, sur la partie inférieure du boîtier de pince (2), une mâchoire de serrage immobile (4) ainsi qu'une mâchoire de serrage mobile (8), qui est portée de façon pivotante l'extrémité avant de la poignée inférieure (11) au moyen d'un tourillon de pivotement (7).

23. Pince selon la revendication 22, caractérisée en ce que la mâchoire de serrage mobile (8) présente une surface de commande (9, 9a) faisant saillie vers l'arrière par rapport au tourillon de pivotement (7), et le long de l'extrémité de laquelle coulisse une extrémité d'un levier articulé (10) dont l'autre extrémité est en contact, en un emplacement, avec la partie d'entraînement (12) qui, par rapport à la position de support de la poignée inférieure (11) sur le corps de pince (2), est située en avant.

24. Pince selon la revendication 23, caractérisée en ce qu'entre les mâchoires de serrage (4, 8) est guidé un élément de traction (26) comportant des mâchoires de coupe et de dégainage (24, 25) et qui présente un bec (A) dirigé vers la surface de commande (9) et situé sur un prolongement dirigé vers l'arrière, ce bec étant actionné par l'extrémité du levier articulé (10) qui coulisse le long de la surface de commande (9, 9a).

25. Pince selon la revendication 24, caractérisée en ce que l'élément de traction (26) comporte des ergots de guidage latéral (32, 33) qui sont guidées dans des rainures longitudinales (34) du corps de pince (2).

26. Pince selon la revendication 25, caractérisée en ce que le prolongement dirigé vers l'arrière de l'élément de traction (26) est muni d'une partie déformable (35) qui, pour guider le retour de l'élément de traction (26) vers à sa position de départ, s'appuie sur un élément de support (S) qui est fixé sur la poignée inférieure (11).

27. Pince selon l'une des revendications 24 à 26, caractérisée en ce que l'élément de traction (26) est composé d'une partie réalisée monobloc en matière synthétique.
